(19) Europäisches Patentamt
European Patent Office
Office européen des brevets

(11) **EP 4 495 952 A1**

(12) **EUROPEAN PATENT APPLICATION**

(43) Date of publication:
**22.01.2025 Bulletin 2025/04**

(21) Application number: **24182131.3**

(22) Date of filing: **13.06.2024**

(51) International Patent Classification (IPC):
**G21K 1/00** (2006.01)   **G21K 1/02** (2006.01)
**H05H 3/00** (2006.01)

(52) Cooperative Patent Classification (CPC):
**G21K 1/006; G21K 1/02; H05H 3/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.07.2023 JP 2023117681**

(71) Applicants:
• **Japan Aviation Electronics Industry, Limited
Tokyo 150-0043 (JP)**
• **Tokyo Institute of Technology
Tokyo 152-8550 (JP)**

(72) Inventors:
• **KOZUMA, Mikio
Meguro-ku, Tokyo, 152-8550 (JP)**
• **INOUE, Ryotaro
Meguro-ku, Tokyo, 152-8550 (JP)**
• **SATO, Tomoya
Meguro-ku, Tokyo, 152-8550 (JP)**
• **TANAKA, Atsushi
Shibuya-ku, Tokyo, 150-0043 (JP)**
• **HOSOYA, Toshiyuki
Shibuya-ku, Tokyo, 150-0043 (JP)**

(74) Representative: **MERH-IP Matias Erny Reichl
Hoffmann
Patentanwälte PartG mbB
Paul-Heyse-Straße 29
80336 München (DE)**

(54) **QUANTUM COLLIMATION METHOD FOR ATOMIC BEAM, QUANTUM COLLIMATOR FOR ATOMIC BEAM, ATOMIC INTERFEROMETER, AND ATOMIC GYROSCOPE**

(57) An atomic beam 110 is quantum-mechanically collimated. The atomic beam 110 is irradiated with a pumping laser beam 701a and a filtering laser beam 701b in this order. The pumping laser beam 701a has a wavelength corresponding to a transition between a ground state and an excited state of atoms in the atomic beam 110. Irradiation with the pumping laser beam 701a causes atoms to make transition from the ground state to the excited state and further relax from the excited state to a metastable state. The filtering laser beam 701b has a wavelength corresponding to a transition between the ground state and the metastable state. By irradiating the filtering laser beam 701b, atoms in the metastable state having velocity components equal to or smaller than a predetermined velocity component $\Delta v$ in a traveling direction of the filtering laser beam 701b are caused to make transition to the ground state.

FIG. 2

EP 4 495 952 A1

**Description**

TECHNICAL FIELD

The present disclosure generally relates to a technique for quantum-mechanically collimating an atomic beam.

BACKGROUND ART

In recent years, a collimated atomic beam has been used in atomic beam lithography, atomic interferometers, and the like. As techniques for collimating an atomic beam, the following techniques have been known, for example: a technique for collimating an atomic beam escaping from an atomic beam source by using two or more slits spaced apart from one another in a traveling direction of the atomic beam (for example, see the configuration shown in FIG. 2 of Non-Patent Literature 1), a technique for collimating by using a two-dimensional magneto-optical trap (2D-MOT) mechanism (for example, see Non-Patent Literature 2), and a technique for collimating by using at least three laser beams arranged in parallel to one another (for example, see Patent Literature 1). In particular, the collimation technique disclosed in Patent Literature 1 is excellent in that it can be implemented with a small size (particularly a small size in the traveling direction of the atomic beam) and can achieve good collimation while reducing the drop in atomic flux.

(Patent Literature 1) Japanese Patent No. 6713643
(Non-Patent Literature 1) St. Bernet, R. Abfalterer, C. Keller, M. Oberthaler, J. Schmiedmayer and A. Zeilinger, "Matter waves in time-modulated complex light potentials," Phys. Rev. A 62, 023606 (2000).
(Non-Patent Literature 2) J. Schoser, A. Batar, R. Low, V. Schweikhard, A. Grabowski, Yu. B. Ovchinnikov, and T. Pfau, "Intense source of cold Rb atoms from a pure two-dimensional magneto-optical trap," PHYSICAL REVIEW A, 66, 023410 2002.

Although the collimation technique disclosed in Patent Literature 1 is an excellent collimation technique as described above, it requires two laser beams to be arranged in parallel with high precision. According to the collimation technique disclosed in Patent Literature 1, a first laser beam causes atoms, the atoms having sufficiently small predetermined velocity components in a direction orthogonal to the traveling direction of the atomic beam ("orthogonal direction"), to make transition from a ground state to a first excited state, a second laser beam gives momentums to atoms in the ground state (that is, atoms other than the atoms having the sufficiently small predetermined velocity components in the orthogonal direction) before the atoms in the first excited state drop to the ground state by spontaneous emission, and further a third laser beam causes the atoms, the atoms having the sufficiently small predetermined velocity components in the orthogonal direction, to make get back from the first excited state to the ground state, so that excellent collimation of the atomic beam is achieved. Accordingly, it is particularly required that the first laser beam and the third laser beam be arranged in parallel to each other with high accuracy. Otherwise, atoms that resonate with the first laser beam will not resonate with the third laser beam, and therefore, it is difficult to get back the energy eigenstate of the atoms, the atoms having the sufficiently small predetermined velocity components in the orthogonal direction, from the first excited state to the ground state. As an example of accuracy, the relative angle between the first laser beam and the third laser beam is less than 0.1 milliradian (mrad).

BRIEF SUMMARY OF THE INVENTION

In view of the background art and technical problem described above, a technique for collimating an atomic beam using a laser beam without requiring highly accurate parallel arrangement of laser beams is disclosed.
The technical matters described herein are not intended to limit the claimed invention either explicitly or implicitly, and are not intended to enable anyone other than those who benefit from the invention (for example, the applicant and the proprietors) to limit the claimed invention but are provided solely to facilitate understanding of the gist of the present invention. A summary of the invention from other aspects can be understood, for example, from the claims at the time of filing this patent application.
The above-mentioned prior art techniques are for physically collimating an atomic beam, but the collimation technique of the present disclosure is a technique for quantum-mechanically collimating an atomic beam. The term "physical collimation" means narrowing a width having a length-dimension of an atomic beam, whereas the term "quantum collimation" or "quantum-mechanically collimating" means bringing, into a desired energy eigenstate, only atoms that are in an atomic beam and that travel in a certain direction within the atomic beam traveling while spreading; more precisely, only atoms that have velocity components equal to or smaller than a predetermined velocity component $\Delta v$ in the traveling direction of a filtering laser beam described later. In other words, according to the "quantum collimation", while the width of the atomic beam is not controlled, the atoms in the desired energy eigenstate in the atomic beam have velocity components equal to or smaller than the predetermined velocity component Δv in a direction orthogonal to the aforementioned certain direction in the atomic beam, and therefore, from a quantum theoretical point of view, the atomic beam is collimated in the aforementioned certain direction. Even when the atoms in the desired energy eigenstate and atoms in other energy eigenstates exist together in the atomic beam, the atoms in the other energy eigenstates are insensitive to light that is capable of interacting with the atoms in the desired energy eigenstate, so that the atomic beam quantum-mechanically collimated is practical. However, it is desirable that the lifetimes of other energy eigenstates be as long as possible. From the viewpoint of collimation, Δv is usually set to a sufficiently small value, but the specific value of Δv is determined according to actual cases.

The method of the present disclosure is a method for quantum-mechanically collimating an atomic beam. The method disclosed includes a) irradiating the atomic beam with a pumping laser beam having a wavelength corresponding to a transition between a ground state and an excited state of atoms in the atomic beam, thereby causing the atoms in the atomic beam to make transition from the ground state to the excited state and further to relax from the excited state to a metastable state of the atoms, and b) irradiating, after the irradiating of the pumping laser beam, the atomic beam with a filtering laser beam having a wavelength corresponding to a transition between the ground state and the metastable state, thereby causing the atoms in the metastable state, which are in the atomic beam and have velocity components equal to or smaller than a predetermined velocity component Δv in a traveling direction of the filtering laser beam, to make transition to the ground state.

A collimator of the present disclosure is a collimator for quantum-mechanically collimating an atomic beam. The collimator includes an irradiation device configured to irradiate the atomic beam with a pumping laser beam and a filtering laser beam in this order. The pumping laser beam is a laser beam having a wavelength corresponding to a transition between a ground state and an excited state of atoms in the atomic beam. The filtering laser beam is a laser beam having a wavelength corresponding to a transition between the ground state and a metastable state to which atoms in the excited state make transition in a relaxation process.

These and other objects, features and advantages of the present disclosure will become apparent from the detailed description taken in conjunction with the accompanying drawings.

EFFECTS OF THE INVENTION

According to the technique of the present disclosure, an atomic beam can be collimated using laser beams without requiring highly accurate parallel arrangement of the laser beams.

BRIEF DESCRIPTION OF THE DRAWINGS

The subject matter, which is regarded as the invention, is particularly pointed out and distinctly claimed in the claims at the conclusion of the specification. The present disclosure itself, and manner in which it may be made or used, if any, may be better understood after a review of the following description in connection with the accompanying drawings in which:

FIG. 1 is a diagram showing quantum collimation of a thermal atomic beam;
FIG. 2 is a diagram showing quantum collimation of a cold atomic beam;
FIG. 3 is a diagram showing the relationship among a ground state, an excited state, a metastable state;
FIG. 4 is a graph showing the relationship between the velocity components of atoms in a traveling direction of a laser beam and the population of atoms that have made transition from the metastable state to the ground state;
FIG. 5 is a diagram showing a Mach-Zehnder type atomic interferometer using an atomic beam collimator; and
FIG. 6 is an example of the configuration of an atomic interferometer.

LIST OF REFERENCE NUMERALS

With regard to reference numerals used, the following numbering is used throughout the drawings.

100: atomic beam source
100a: heater
100b: nozzle
110: atomic beam
110a: atomic beam
110b: convergent atomic beam
110c: atomic beam
200: vacuum container

201a: moving standing light wave
201b: moving standing light wave
201c: moving standing light wave
250: interference device
350: moving standing light wave generation device
351: laser beam source
352: lens
353: mirror
354: AOM
400: observation device
500: atomic interferometer
600: atomic gyroscope
700: collimator
701a: pumping laser beam
701b: filtering laser beam
710: irradiation device
721: laser beam source
722: laser beam source
740: lens

DETAILED DESCRIPTION

Embodiments of the herein disclosed technique for collimating an atomic beam will be described with reference to the drawings. Note that the drawings are for understanding the embodiment, and the dimensions of each illustrated component are different from the actual dimensions.

In the exemplary embodiments, a collimator 700 quantum-mechanically collimates an atomic beam 110 escaping from an atomic beam source 100 contained in a vacuum container 200.

The atomic beam source 100 continuously generates an atomic beam 110. The atomic beam 110 may be a thermal atomic beam or a cold atomic beam. An example of the configuration of the atomic beam source 100 for continuously generating a thermal atomic beam and an example of the configuration of the atomic beam source 100 for continuously generating a cold atomic beam will be described below.

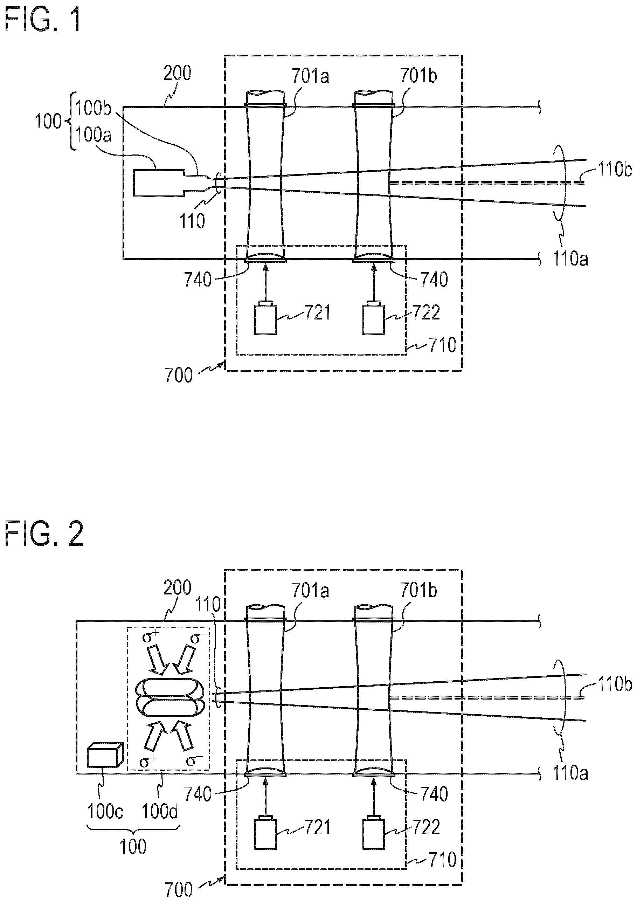

The atomic beam source 100 for continuously generating a thermal atomic beam has, for example, a configuration including a heater 100a and a nozzle 100b communicating with the heater 100a (see FIG. 1). The heater 100a generates gaseous atoms by heating a solid made of a single element with high purity. Gaseous atoms obtained by the heater 100a escape from the atomic beam source 100 through the heated nozzle 100b as a thermal atomic beam. See FIG. 1 of Reference Literature 1 as an example of the configuration of such an atomic beam source 100.

(Reference Literature 1) Cvejanovic D and Murray A J, "Design and characterization of an atomic beam oven for combined laser and electron impact experiments," Meas. Sci. Tech. 13 1482-1487 (2002).

The traveling direction of the thermal atomic beam is a direction in which a line obtained by connecting the peaks of the density distribution of atoms included in the thermal atomic beam extends, and it normally matches an ejection direction of the nozzle 100b (that is, a direction in which the central axis of the nozzle 100b extends). Since the flow of gaseous atoms narrowed down by a discharge hole located at the tip of the nozzle 100b is not a parallel flow but a jet flow of gaseous atoms which are ejected at a minute solid angle, the thermal atomic beam comprises atoms having velocity components in a direction orthogonal to the traveling direction of the thermal atomic beam. The average velocity of the atoms in the thermal atomic beam in the traveling direction of the thermal atomic beam is approximately several hundreds m/s (Rb: ~300 m/s, Yb: ~300 m/s, Ca: ~600 m/s).

The atomic beam source 100 for continuously generating a cold atomic beam has a configuration including, for example, a gaseous atom generator 100c and a laser cooler 100d (see FIG. 2).

The gaseous atom generator 100c has a configuration in which solid sublimates or liquid evaporates or volatilizes, and generates gaseous atoms. The solid or liquid preferably made of a highly pure single element. When strontium, calcium, or the like is used, the heater 100a is required. However, when rubidium, cesium, or the like is used, sufficient gaseous atoms can be obtained without using the heater 100a because the saturated vapor pressure at room temperature (a temperature suitable for human activities) is high (that is, it is easily vaporized). Gaseous atoms (hereinafter simply referred to as atoms) filled in one section of the vacuum container 200 are naturally supplied to the laser cooler 100d.

The laser cooler 100d includes, for example, a two-dimensional magneto-optical trap (2D-MOT) mechanism including a coil for generating a magnetic field, called hairpin wires, and two pairs of laser beams for cooling, a 2D$^+$-MOT having a configuration in which another pair of laser beams along a zero magnetic field line of the two-dimensional quadrupole magnetic field is added to the 2D-MOT mechanism, a three-dimensional magneto-optical trap (3D-MOT) mechanism composed of a coil for forming two-dimensional quadrupole magnetic field (for example, Ioffe coils) and three pairs of laser beams arranged along three symmetry axes of the two-dimensional quadrupole magnetic field, or a configuration including a combination of two or more of these mechanisms. The laser cooler 100d may include a Zeeman decelerator if necessary. Alternatively, the mechanism disclosed in Reference Literature 2 may be adopted as the laser cooler 100d. The laser cooler 100d generates a cold atomic beam from a group of cold atoms trapped in space.

(Reference Literature 2) Japanese Patent Application Laid-Open No. 2020-020636

Since the cold atomic beam escaping from the atomic beam source 100 is not a parallel flow but a flow that spreads at a minute solid angle, the cold atomic beam comprises atoms having velocity components in a direction orthogonal to the traveling direction of the cold atomic beam. The traveling direction of the cold atomic beam is a direction in which a line obtained by connecting the peaks of the density distribution of atoms in the cold atomic beam extends. The average velocity of the atoms in the cold atomic beam in the traveling direction of the cold atomic beam is approximately several tens m/s.

Hereinafter, the direction orthogonal to the traveling direction of the atomic beam 110 is simply referred to as orthogonal direction.

As described above, the collimation technique of the present disclosure does not control the width of an atomic beam itself, but instead brings only the atoms traveling in a certain direction within the atomic beam that travels while spreading, into a desired energy eigenstate. An outline of an embodiment based on this concept is as follows. First, an atomic beam is irradiated with a first laser beam having a wavelength corresponding to the transition between a ground state and an excited state of the atoms in the atomic beam (in this specification, this first laser beam is referred to as a pumping laser beam). As a result, almost all the atoms in the atomic beam make transition from the ground state to the excited state, and further relax from the excited state to a metastable state. After the irradiation with the first laser beam, the atomic beam is irradiated with a second laser beam having a wavelength corresponding to the transition between the ground state and the metastable state (in this specification, the second laser beam is referred to as a filtering laser beam). As a result, only atoms having velocity components equal to or smaller than a predetermined velocity component $\Delta v$ in the traveling direction of the second laser beam make transition from the metastable state to the ground state. Therefore, the atomic beam which was irradiated with the first laser beam and the second laser beam in this order comprises substantially a) atoms in the ground state which have velocity components equal to or smaller than the predetermined velocity component $\Delta v$ in the traveling direction of the second laser beam, or b) atoms in the metastable state which have velocity components larger than the predetermined velocity component $\Delta v$ in the traveling direction of the second laser beam.

In such an embodiment, two laser beams (preferably, Gaussian beams) aligned along the traveling direction of the atomic beam are used. The arrangement of the two laser beams in the embodiment can have an overall length in the traveling direction of the atomic beam enough shorter than the spacing of slits in the traveling direction of the atomic beam required in the atomic beam collimation technique using slits. Furthermore, since the collimation technique of the present disclosure does not obstruct the travel of atoms, it is possible to enough control the decrease in atomic flux as compared with the atomic beam collimation technique using slits. Moreover, since the collimation technique of the present disclosure selects only atoms having velocity components equal to or smaller than a predetermined velocity component $\Delta v$ in the traveling direction of the second laser beam, excellent collimation can be achieved. In addition to these features, according to the collimation technique of the present disclosure, since the first laser beam is a laser beam for optical pumping, the traveling direction of the first laser beam is not required to be orthogonal to the traveling direction of the atomic beam, and it is not also required to arrange the first laser beam and the second laser beam in parallel to each other with high accuracy. The details of the present embodiment will be described below. In the following description, the first laser beam is referred to as a pumping laser beam, and the second laser beam is referred to as a filtering laser beam.

The atomic beam 110 enters the collimator 700 (see FIGS. 1 and 2). The collimator 700 includes an irradiation device 710 which is configured to independently irradiate the atomic beam 110 with a pumping laser beam 701a and a filtering laser beam 701b in this order. Therefore, in the course of the travel of the atomic beam 110, the atomic beam 110 is independently irradiated with the pumping laser beam 701a and the filtering laser beam 701b in the order of the pumping laser beam 701a and then the filtering laser beam 701b.

Since the pumping laser beam 701a is a laser beam for optical pumping, it is unnecessary to perform a highly accurate angle adjustment for making the irradiation direction of the pumping laser beam 701a (that is, the traveling direction of the pumping laser beam 701a) orthogonal to the traveling direction of the atomic beam 110. For example, the angle between the traveling direction of the pumping laser beam 701a and the traveling direction of the atomic beam 110 may deviate from 90 degrees by 10 degrees or more. Just to be sure, the angle between the traveling direction of the pumping laser beam 701a and the traveling direction of the atomic beam 110 may deviate significantly from 90 degrees, but there is usually no particular advantage in such a configuration.

Furthermore, there is also no need to perform highly accurate angle adjustment for making the irradiation direction of the filtering laser beam 701b (that is, the traveling direction of the filtering laser beam 701b) orthogonal to the traveling direction of the atomic beam 110. This is because atoms, within the atomic beam 110 that travels while spreading, traveling in a direction approximately orthogonal to the traveling direction of the filtering laser beam 701b make transition from a metastable state to a ground state. In other words, the atoms traveling in the direction approximately orthogonal to the traveling direction of the filtering laser beam 701b have velocity components equal to or smaller than a predetermined sufficiently small velocity component $\Delta v$ in the traveling direction of the filtering laser beam 701b. In short, the atomic beam 110 is collimated with respect to the direction approximately orthogonal to the traveling direction of the filtering laser beam 701b, so that there is no need to set the traveling direction of the filtering laser beam 701b in relation to the traveling direction of the atomic beam 110. However, from the viewpoint of the flux of the atomic beam 110 quantum-mechanically collimated, it is preferable that the traveling direction of the filtering laser beam 701b is made as orthogonal to the traveling direction of the atomic beam 110 as possible. Moreover, in relation to the interference device 250 described below, it is preferable that the traveling direction of the filtering laser beam 701b is parallel to the traveling directions of three moving standing light waves 201a, 201b, and 201c described later.

The pumping laser beam 701a will be described. The pumping laser beam 701a has a wavelength $\lambda_1$ corresponding to the transition between the ground state of the atoms in the atomic beam 110 and the excited state of the atoms. Almost all atoms in the atomic beam 110 make transition from the ground state to the excited state by passing through the pumping laser beam 701a, and further relax from the excited state to the metastable state (first step).

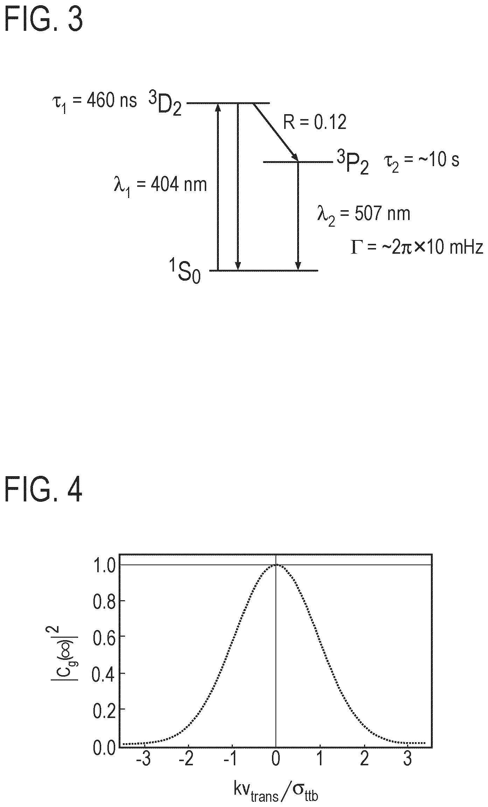

Since this relaxation process is a stochastic process, it is desirable that the pumping laser beam 701a satisfies a condition X in which each atom in the atomic beam 110 is relaxed to the metastable state with a predetermined probability in the course of passing through the pumping laser beam 701a. The condition X in the relaxation process of the A-type three-level system (see FIG. 3) will be described below.

In the A-type three-level system, an atom in the excited state relaxes from the excited state to the ground state or metastable state. Hereafter, we consider a case where the power density of the pumping laser beam 701a is sufficiently larger than the saturation intensity of the transition between the ground state and the excited state. When the width of the pumping laser beam 701a in a region of the pumping laser beam 701a through which the atomic beam 110 passes is represented by W [unit: m], the average value of the velocity components in the traveling direction of the atomic beam 110 of the atoms in the atomic beam 110 is represented by v [unit: m/s], the number of times of excitation and relaxation cycles required for each atom in the atomic beam 110 to relax to the metastable state with a predetermined probability in the relaxation process is represented by N, and an expected value of a time which is taken for each atom in the excited state in the atomic beam 110 to relax only once is represented by E, the condition X is expressed by formula (1) because a time W/v required for each atom to cross the pumping laser beam 701a is larger than a time E×N required for N times of relaxation to occur. In the case of spontaneous emission, when the lifetime of the excited state is represented by $\tau$, the number of atoms in the excited state at time t is represented by N(t), and Napier's constant is represented by e, $N(t)=N(0)\times e^{-t/\tau}$ holds ($1/\tau$ represents Einstein's A coefficient). Therefore, for example, when $N(t)/N(0)=0.01$, the expected value $E=-\tau\ln(0.01)\cong 4.6\tau$. More specifically, in order to set the energy eigenstate of each atom into the metastable state with a probability of $\beta$ ($0<\beta<1$) in the process of repeating optical pumping and relaxation, the probability that the energy eigenstate of each atom after N times of relaxation is the ground state is required only to be less than $1-\beta$, and thus the formula (2) must be satisfied. The formula (2) is equivalent to the formula (3). In the formulas (2) and (3), R ($0<R<1$) represents the branching ratio of each atom in the atomic beam 110 from the excited state to the metastable state. Therefore, the formula (4) is obtained. From the viewpoint of making the energy eigenstates of almost all the atoms in the atomic beam 110 into the metastable state by irradiating the atomic beam 110 with the pumping laser beam 701a, the value of $\beta$ is preferably large, for example, $\beta \geq 0.99$ is satisfied.

$$W > v \times E \times N \tag{1}$$

$$(1-R)^N < (1-\beta) \tag{2}$$

$$\frac{\log_{10}(1-\beta)}{\log_{10}(1-R)} < N \tag{3}$$

$$W > \frac{(\log_{10}(1-\beta))vE}{\log_{10}(1-R)} \tag{4}$$

As described above, when the power density I of the pumping laser beam 701a is sufficiently larger than the saturation intensity $I_s$ of the transition between the ground state and the excited state, the following formula (5) holds for the power P of the pumping laser beam 701a.

$$P \gg I_s W^2$$

Next, the filtering laser beam 701b will be described. The filtering laser beam 701b has a wavelength $\lambda_2$ corresponding to the transition between the ground state of the atoms in the atomic beam 110 and the metastable state of the atoms. Although the energy eigenstates of almost all the atoms in the atomic beam 110 after the first step are the metastable state, but the atoms in the metastable state which are in the atomic beam 110 and have velocity components equal to or smaller than a predetermined velocity component $\Delta v$ in the traveling direction of the filtering laser beam 701b make transition from the metastable state to the ground state by passing through the filtering laser beam 701b (second step).

Here, the maximum value $\Delta v$ of the velocity components in the traveling direction of the filtering laser beam 701b of the atoms will be described. The spectral line of the atoms that crosses the filtering laser beam 701b and have no velocity component vt (that is, vt=0) in the traveling direction of the filtering laser beam 701b has broadening $\sigma_{ttb}$ (hereinafter referred to as transit-time broadening) of a linewidth caused by a time in which the atoms cross the filtering laser beam 701b. When the filtering laser beam 701b is a Gaussian beam, it is known that the transit-time broadening $\sigma_{ttb}$ is expressed by formula (6) where the beam waist of the Gaussian beam (based on $1/(e^2)$ half width) is represented by w [unit: m]. When the power density $I_f$ of the filtering laser beam 701b is sufficiently weak (that is, $I_f < I_s$) for an optical transition whose natural width $\Gamma$ is sufficiently smaller than the transit-time broadening $\sigma_{ttb}$ (that is, $\Gamma \ll \sigma_{ttb}$), the spectral linewidth is featured by the transit-time broadening $\sigma_{ttb}$. However, when the power density $I_f$ of the filtering laser beam 701b is not sufficiently weak, it is necessary to consider an effect that the effective Rabi frequency between the ground state and the metastable state changes depending on the frequency of the filtering laser beam 701b. Therefore, the spectral width changed due to the effect is expressed by formula (7) using a correction coefficient $\alpha$. Accordingly, the maximum value $\Delta v$ is expressed by formula (8) from the relationship $\omega_{doppler} = kv_t$ of frequency shift caused by a Doppler effect. Here, k represents the wave number of the filtering laser beam 701b. Regarding this point, the optical Bloch equation of a two-level system in a Gaussian beam is expressed by simultaneous differential equations of formula (9) and formula (10). In the simultaneous differential equations, $\Omega(t)$ represents the Rabi frequency at time t, $\Omega_0$ represents the Rabi frequency at time t=0, $\sigma_t = w/(2v)$, $|c_g(t)|^2$ represents the population in the ground state, $|c_{sub}(t)|^2$ represents the population in the metastable state, k represents the wave number of the Gaussian beam, and i represents the imaginary unit. In an initial state, $c_g(-\infty)=0$, and $c_{sub}(-\infty)=1$ (in numerical calculations, initial values in a sufficiently long finite time range are adopted). When the frequency of the Gaussian beam which is seen from an atom having a velocity component vt in the traveling direction of the Gaussian beam is represented by $\omega$ and the resonance frequency between the energy level of the ground state and the energy level of the metastable state is represented by $\omega_0$, $\omega = \omega_0 + kv_t$ holds. FIG. 4 shows a graph showing the relationship between vt and the population of the atoms that have made transition from the metastable state to the ground state at time t=$\infty$ (in numerical calculations, this is a final value of the sufficiently long finite time range), which is obtained by plotting numerical calculation results of the simultaneous differential equations for each value of Vt under the condition that the laser beam 701b causes the atoms having no velocity component vt (that is, vt=0) in the traveling direction of the laser beam 701b to make transition from the metastable state to the ground state by 100% (so-called $\pi$ pulse condition). The linewidth $\sigma_\omega$ of the spectral line of the atoms that cross the Gaussian beam and have velocity components in the traveling direction of the Gaussian beam are calculated by Gaussian fitting of the graph shown in FIG. 4, resulting in acquisition of $\sigma_\omega \cong 0.95\sigma_{ttb}$. Therefore, under the condition of the maximum efficiency for making the atoms transition from the metastable state to the ground state(that is, the $\pi$ pulse condition), $\alpha \cong 0.95$.

$$\sigma_{ttb} = v/w \tag{6}$$

$$\sigma_\omega = \alpha \times \sigma_{ttb} \tag{7}$$

$$\Delta v = \sigma_\omega / k = \alpha \times \sigma_{ttb} / k = \frac{\alpha v}{kw} \tag{8}$$

$$\frac{dc_g(t)}{dt} = -i \frac{\Omega(t)}{2} c_{sub}(t) \tag{9}$$

$$\frac{dc_{sub}(t)}{dt} = -i \frac{\Omega(t)}{2} c_g(t) + ik v_t c_{sub}(t) \tag{10}$$

$$\Omega(t) \equiv \Omega_0 \exp\left(-\frac{t^2}{2\sigma_t^2}\right)$$

A specific example in which the atoms in the atomic beam 110 are ytterbium ($^{174}$Yb) will be described. The pumping laser beam 701a has a wavelength $\lambda_1$=404 nm corresponding to the transition between the energy level ($^1S_0$) of the ground state and the energy level ($^3D_2$) of the excited state (see FIG. 3). The lifetime $\tau_1$ of the excited state is 460 nanoseconds. The filtering laser beam 701b has a wavelength $\lambda_2$=507 nm corresponding to the transition between the energy level ($^1S_0$) of the ground state and the energy level ($^3P_2$) of the metastable state (see FIG. 3). The natural width $\Gamma$ of the transition between the ground state and the metastable state is about $2\pi \times 10$ mHz, and the lifetime $\tau_2$ of the metastable state is about 10 seconds. Further, the average value v of the velocity components, in the traveling direction of the atomic beam 110, of the atoms in the atomic beam 110 is 30 m/s, and the beam waist w of the filtering laser beam 701b is 1 mm. According to this specific example, since the natural width $\Gamma$ (about $2\pi \times 10$ mHz) is sufficiently smaller than the transit-time broadening $\sigma_{ttb}$, $\Delta v$=2.3×10$^{-3}$ (m/s) is calculated from the formula (8) as described above. Therefore, it can be seen that good quantum collimation can be achieved.

In the embodiment described above, each of the two laser beams (that is, pumping laser beam 701a and filtering laser beam 701b) satisfying the above conditions is realized by appropriately setting each of the beam waist, the wavelength, and the light intensity. Note that the beam waist can be set optically (for example, by converging the laser beam with a lens), and the light intensity can be set electrically (for example, by adjusting the output power). In short, the configuration of a generation device for each laser beam is the same as the configuration according to prior arts. Thus, description of the configuration of an irradiation device 710 in which two devices each for generating a laser beam are arranged side by side is omitted (in FIGS. 1 and 2, laser beam sources 721, 722 and lenses 740 are schematically shown).

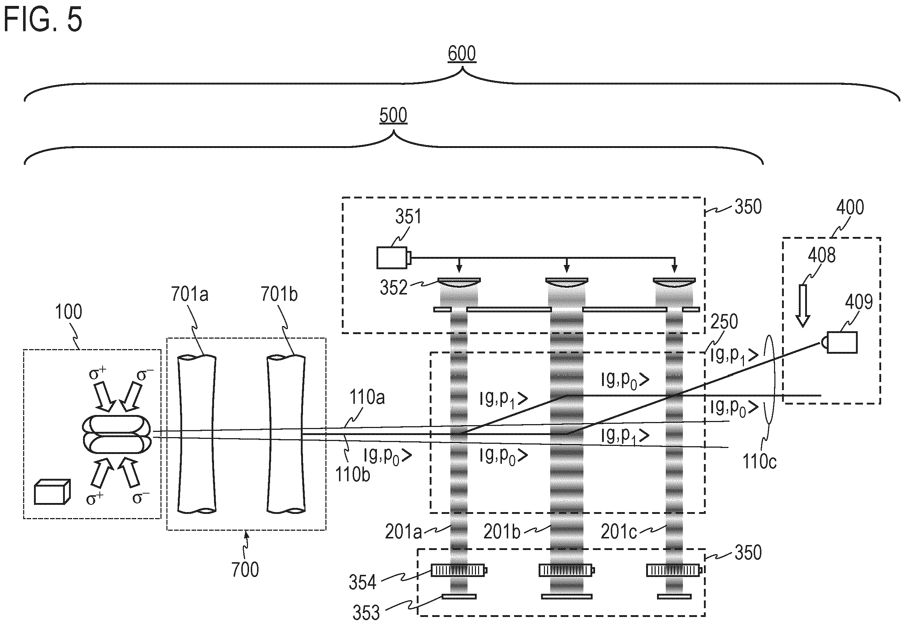

Next, a Mach-Zehnder type atomic gyroscope 600 using the above-described collimator 700 will be described. The Mach-Zehnder type atomic gyroscope 600 includes a Mach-Zehnder type atomic interferometer 500 and an observation device 400 (see FIG. 5). The Mach-Zehnder type atomic interferometer 500 includes an atomic beam source 100, the collimator 700, an interference device 250, and a moving standing light wave generation device 350 (see FIG. 5). In this example, the atomic beam source 100, the interference device 250, and the observation device 400 are housed in the vacuum container 200 (illustration of the vacuum container 200 is omitted in FIG. 5).

The atomic beam 110a which has been quantum-mechanically collimated by the collimator 700 as described above enters the interference device 250. Since the atomic beam 110a entering the interference device 250 comprises atoms in the metastable state, it is preferable to perform subsequent processing on the atomic beam 110a in a time which is as shorter as possible than the lifetime of the metastable state. Although there is no definitive definition of the lifetime of the metastable state, the lifetime of the metastable state is typically relatively long. Therefore, it is expected that subsequent processing can be completed in a shorter time than the lifetime of the metastable state. For example, when the lifetime $\tau_2$ of the metastable state is about 10 seconds, the average value v of the velocity components, in the traveling direction of the atomic beam 110, of the atoms in the atomic beam 110 is 30 m/s, and the total length of the interference device 250 is 1 m, the time for subsequent processing is at most (1/30) s, which is sufficiently shorter than the lifetime $\tau_2$ of the metastable state.

Before describing the interference device 250, the moving standing light wave generation device 350 will be described. The Mach-Zehnder type atomic interferometer 500 uses n-th order Bragg diffraction (where n is a predetermined positive integer of 2 or more). The moving standing light wave generation device 350 generates three moving standing light waves (a first moving standing light wave 201a, a second moving standing light wave 201b, and a third moving standing light wave 201c) that satisfy an n-th order Bragg condition. The first moving standing light wave 201a also satisfies a condition of functioning as a splitter for the atomic beam, the second moving standing light wave 201b also satisfies a condition of functioning as a mirror for the atomic beam, and the third moving standing light wave 201c also satisfies a condition of functioning as a combiner for the atomic beam.

Each of the three moving standing light waves (the first moving standing light wave 201a, the second moving standing light wave 201b, and the third moving standing light wave 201c) that satisfy these conditions is realized by appropriately setting each of the beam waist, wavelength, and light intensity of a Gaussian beam, and further difference frequency between counter-propagating laser beams. Note that it is possible to optically set the beam waist of the Gaussian beam (for example, a laser beam is converged with a lens), and electrically set the light intensity of the Gaussian beam (for example, the output power of the Gaussian beam is adjusted). In short, while values of the generation parameters for the moving standing light waves are appropriately selected so as to satisfy the above conditions, the configuration of the moving standing light wave generation device 350 that generates these three moving standing light waves is not different from the configuration adopted in the prior arts. Thus, description of the configuration of the moving standing light wave generation device 350 is omitted (in FIG. 5, a laser beam source 351, a lens 352, a mirror 353, an AOM 354, etc. are schematically illustrated). For details of the configuration of the moving standing light wave generation device 350, please see the following reference literature 3.

(Reference Literature 3) Japanese Registered Patent No. 6818332

In the interference device 250, the atomic beam 110a passes through the three moving standing light waves 201a, 201b, and 201c in this order. The atomic interferometer in this example uses the transition between two different momentum states $|g, p_0>$ and $|g, p_1>$ under the same internal state, which is caused by light irradiation. Here, the state $|g>$ is a ground state of atoms in the atomic beam 110a quantum-mechanically collimated by the collimator 700. In other words, a processing target of Mach-Zehnder type atomic interference as subsequent processing is atoms in the ground state in the atomic beam 110a quantum-mechanically collimated by the collimator 700. Therefore, in the following description, the flow of the atoms in the ground state in the atomic beam 110a which has been quantum-mechanically collimated is referred to as a convergent atomic beam 110b.

When the convergent atomic beam 110b passes through the first moving standing light wave 201a, the state of each atom whose initial state is $|g, p_0>$ changes to a superposition state of $|g, p_0>$ and $|g, p_1>$. By appropriately setting the interaction between the first moving standing light wave 201a and the atoms (appropriately setting each of the beam waist, the wavelength, the light intensity, and the difference frequency between the counter-propagating laser beams), the ratio of the population of $|g, p_0>$ and the population of $|g, p_1>$ immediately after passing through the first moving standing light wave 201a is 1:1. An atom acquires the momentum of 2n photons ($=p_1-p_0$) when it makes transition from $|g, p_0>$ to $|g, p_1>$ through absorption and emission of 2n photons that traveling against each other. Therefore, the moving direction of the atoms in the state $|g, p_1>$ largely deviates from the moving direction of the atoms in the state $|g, p_0>$. In other words, when the convergent atomic beam 110b has passed through the first moving standing light wave 201a, the convergent atomic beam 110b is split into an atomic beam including atoms in the state $|g, p_0>$ and an atomic beam including atoms in the state $|g, p_1>$ in one-to-one ratio. The traveling direction of the atomic beam including the atoms in the state $|g, p_1>$ is a direction meeting an n-th order Bragg condition. The intersection angle between the direction of the zeroth-order diffraction (that is, the traveling direction of the atomic beam including the atoms in the state $|g, p_0>$ that have not undergone Bragg diffraction) and the direction meeting the n-th order Bragg condition is an angle which is equal to n times of the intersection angle between the direction of the zeroth-order diffraction and the direction meeting a first-order Bragg condition. In other words, it is possible to increase the spread (in other words, the divergence) between the traveling direction of the atomic beam including the atoms in the state $|g, p_0>$ and the traveling direction of the atomic beam including the atoms in the state $|g, p_1>$.

After the splitting, the atomic beam including the atoms in the state $|g, p_0>$ and the atomic beam including the atoms in the state $|g, p_1>$ pass through the second moving standing light wave 201b. By appropriately setting the interaction between the second moving standing light wave 201b and the atoms (more specifically, the beam waist, the wavelength, light intensity, and the difference frequency between counter-propagating laser beams are respectively set appropriately), the atomic beam including atoms in the state $|g, p_0>$ is reversed to the atomic beam including atoms in the state $|g, p_1>$ in the course of passing through the second moving standing light wave 201b, and the atomic beam including atoms in the state $|g, p_1>$ is reversed to the atomic beam including atoms in the state $|g, p_0>$ in the course of the passing through the second moving standing light wave 201b. In this case, with respect to the former, the moving direction of the atoms that have made transition from $|g, p_0>$ to $|g, p_1>$ deviates from the moving direction the atoms in the state $|g, p_0>$ as described above. As a result, the traveling direction of the atomic beam including the atoms in the state $|g, p_1>$ which have passed through the second moving standing light wave 201b is parallel to the traveling direction of the atomic beam including the atoms in the state $|g, p_1>$ which have passed through the first moving standing light wave 201a. Further, with respect to the latter, through absorption and emission of 2n photons traveling against each other, the atoms lose the same momentum as the momentum gained from 2n photons when making transition from $|g, p_1>$ to $|g, p_0>$. In other words, the moving direction of the atoms that have made transition from $|g, p_1>$ to $|g, p_0>$ deviates from the moving direction of the atoms in the state $|g, p_1>$ before the transition. As a result, the traveling direction of the atomic beam including the atoms in the state $|g, p_0>$ after passing through the second moving standing light wave 201b is parallel to the traveling direction of the atomic beam including the atoms in the state $|g, p_0>$ after passing through the first moving standing light wave 201a.

After the reversing, the atomic beam including the atoms in the state $|g, p_0>$ and the atomic beam including the atoms in the state $|g, p_1>$ pass through a third moving standing light wave 201c. At this passage time point, the atomic beam including the atoms in the state $|g, p_0>$ which have been reversed and the atomic beam including the atoms in the state $|g, p_1>$ which have been reversed intersect with each other. By appropriately setting the interaction between the third moving standing light wave 201c and the atoms (more specifically, the beam waist, wavelength, light intensity, and difference frequency between the counter-propagating laser beams are respectively set appropriately), it would be possible to obtain an atomic beam 110c corresponding to a superposition state of $|g, p_0>$ and $|g, p_1>$ of individual atoms included in an intersection region between the atomic beam including the atoms in the state $|g, p_0>$ and the atomic beam including the atoms in the state $|g, p_1>$. Theoretically, the traveling direction of the atomic beam 110c obtained after passing through the third moving standing light wave 201c is one or each of a direction of zeroth-order diffraction and a direction meeting an n-th order Bragg condition.

When an angular velocity or acceleration in a plane including two paths of the atomic beam from the action of the first moving standing light wave 201a until the action of the third moving standing light wave 201c is applied to the Mach-Zehnder type atomic interferometer 500, a phase difference occurs between the two paths of the atomic beam from the action of the first moving standing light wave 201a until the action of the third moving standing light wave 201c, and this phase difference reflects on the population of the state $|g, p_0>$ and the population of the state $|g, p_1>$ of each atom after passing through the third moving standing light wave 201c. Therefore, the observation device 400 can detect the angular velocity or the acceleration by observing the atomic beam 110c from the interference device 250 (that is, the atomic beam 110c obtained after passing through the third moving standing light wave 201c). For example, the observation device 400 irradiates the atomic beam 110c from the interference device 250 with probe light 408, and fluorescence from the atoms in the state $|g, p_1>$ is detected by a photodetector 409. Examples of the photodetector 409 include a photomultiplier tube, a fluorescence photodetector, and the like. Further, according to this example, spatial resolution is enhanced, that is, a CCD image sensor can also be used as the photodetector 409 because the interval between the two paths after passing through the third moving standing light wave (that is, the atomic beam including the atoms in the state $|g, p_0>$ and the atomic beam including the atoms in the state $|g, p_1>$) is large. Alternatively, when a channeltron is used as the photodetector 409, the atomic beam on one of the two paths after passing through the third moving standing light wave may be ionized by a laser or the like instead of the probe light, and ions may also be detected with the channeltron.

The atoms to be used in the Mach-Zehnder type atomic interferometer 500 are preferably alkaline earth metal atoms (calcium, strontium, barium, radium), alkali-earth-like metal atoms (which are atoms having an electron configuration that does not have a magnetic moment caused by electron spin in the ground state similarly to alkaline earth metal atoms, examples of which include beryllium, magnesium, ytterbium, cadmium, mercury, etc.), stable isotopes of alkaline earth metal atoms or stable isotopes of alkali-earth-like metal atoms, on the premise of existence of the energy eigenstate as the metastable state. Since these atoms have two electrons in their outermost shells, the sum of the spin angular momentums of antiparallel electrons is zero, which makes these atoms less susceptible to the influence of environmental magnetic fields. In particular, among alkaline earth metal atoms, alkali-earth-like metal atoms, stable isotopes of alkaline earth metal atoms, or stable isotopes of alkali-earth-like metal atoms, atoms having no nuclear spin are desirable because they are not affected by environmental magnetic fields at all.

Since the alkaline earth metal atoms, the alkali-earth-like metal atoms, the stable isotopes of alkaline earth metal atoms, and the stable isotopes of alkali-earth-like metal atoms do not have hyperfine structures, the output of an atomic interferometer cannot be identified based on the internal states of atoms. However, in this example, the spatial resolution of the output of the atomic interferometer is greatly enhanced by utilizing high-order Bragg diffraction, so that the output of the atomic interferometer can be visually recognized. In this case, when the velocity components in the orthogonal direction of the atomic beam are large, the Bragg diffraction conditions of various orders are simultaneously satisfied, resulting in deterioration of visibility of atomic interference. Therefore, the collimator 700 described above is useful for the Mach-Zehnder type atomic interferometer 500 that utilizes n-th order Bragg diffraction.

In the example of the atomic interferometer described above, the Mach-Zehnder type atomic interference using n-th ($n \geq 2$) order Bragg diffraction is used. However, the Mach-Zehnder type atomic interference is not limited to this type, and for example, it also may utilize Mach-Zehnder type atomic interference using a two-photon Raman process with the moving standing light wave (see Reference Literature 4).

(Reference Literature 4) T. L. Gustavson, P. Bouyer and M. A. Kasevich, "Precision Rotation Measurements with an Atom Interferometer Gyroscope," Phys. Rev. Lett.78, 2046-2049, Published 17 March 1997.

Further, the above-mentioned example of the atomic interferometer utilizes Mach-Zehnder type atomic interference which uses three moving standing light waves to perform one splitting, one reverse, and one mixing. However, the atomic interferometer is not limited to this type, and for example, a multi-stage Mach-Zehnder type atomic interference that performs multiple times of splitting, multiple times of reversing, and multiple times of mixing may be utilized. For such multi-stage Mach-Zehnder type atomic interference, see Reference Literature 5.

(Reference Literature 5) Takatoshi Aoki et al., "High-finesse atomic multiple-beam interferometer comprised of copropagating stimulated Raman-pulse fields," Phys. Rev. A 63, 063611 (2001) Published 16 May 2001.

Further, the atomic interferometer to which the herein disclosed collimator is applied is not limited to the Mach-Zehnder type atomic interferometer, but may be, for example, a Ramsey-Bode type atomic interferometer.

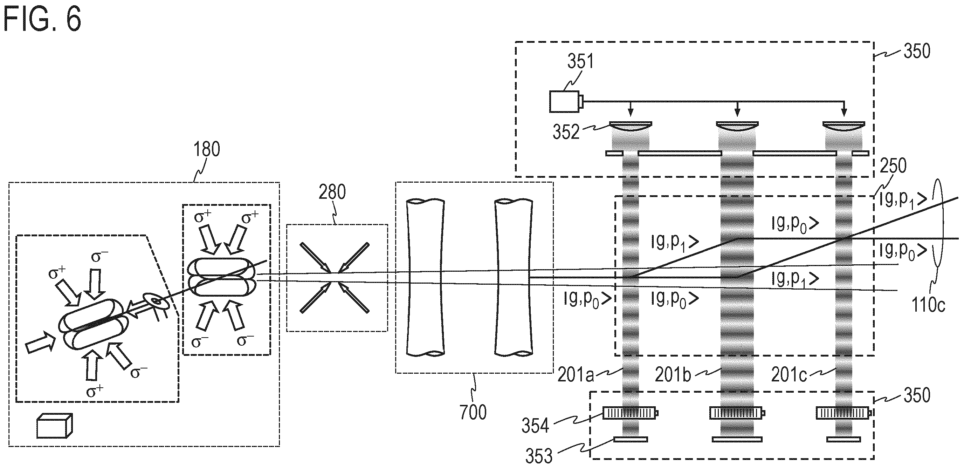

The atomic interferometer of the present disclosure is not limited to the configuration shown in FIG. 5 that employs the quantum collimation technique of the present disclosure, but may have a configuration C (see FIG. 6) described below. Before describing this configuration C, an atomic interferometer (not shown) of a related art in which prior arts are combined will be described. The atomic interferometer of the related art includes an atomic beam source disclosed in Reference Literature 6, a device for adjusting the velocity of atoms disclosed in Reference Literature 7 or Reference Literature 8, a collimation device disclosed in the above-mentioned Patent Literature 1, an interference device 250, and a moving standing light wave generation device 350 (see FIG. 5 for the interference device 250 and the moving standing light wave generation device 350). In the atomic interferometer of the related art, the atomic beam from the atomic beam source disclosed in Reference Literature 6 enters the device for adjusting the velocity of atoms disclosed in Reference Literature 7 or Reference Literature 8, and the dispersion of a velocity distribution of atoms in the traveling direction of the atomic beam is reduced. If necessary, the path of the atomic beam is also adjusted by the device for adjusting the velocity of atoms disclosed in Reference Literature 7 or Reference Literature 8. The atomic beam from the device for adjusting the velocity of atoms disclosed in Reference Literature 7 or Reference Literature 8 enters the collimation device disclosed in the above-mentioned Patent Literature 1, and is physically collimated as described above. The configuration C (see FIG. 6) includes the quantum collimation device of the present disclosure instead of the collimation device disclosed in the above-mentioned Patent Literature 1. In other words, the configuration C includes an atomic beam source 180 disclosed in Reference Literature 6, a device 280 for adjusting the velocity of atoms disclosed in Reference Literature 7 or Reference Literature 8, the collimator 700 of the present disclosure, and the interference device 250 and the moving standing light wave generation device 350. In the atomic interferometer of the present disclosure having configuration C, the atomic beam from the atomic beam source 180 disclosed in Reference Literature 6 enters the device 280 for adjusting the velocity of atoms disclosed in Reference Literature 7 or Reference Literature 8, and the dispersion of a velocity distribution of atoms in the traveling direction of the atomic beam is reduced. If necessary, the path of the atomic beam is also adjusted by the device 280 for adjusting the velocity of atoms disclosed in Reference Literature 7 or Reference Literature 8. The atomic beam from the device 280 for adjusting the velocity of atoms disclosed in Reference Literature 7 or Reference Literature 8 enters the collimator 700 of the present disclosure, and is quantum-mechanically collimated as described above.

(Reference Literature 6) Japanese Patent No. 6650647
(Reference Literature 7) Japanese Patent No. 6948655
(Reference Literature 8) Japanese Patent No. 6948656

<Supplement 1>

The technical features disclosed in the various embodiments and modifications thereof described above are not necessarily mutually exclusive. As long as there is no contradiction from a technical point of view, technical features of a certain embodiment or a modification thereof may be applied to technical features of another embodiment or a modification thereof.

The claims recited in "Claims" as originally filed do not necessarily exhaustively and comprehensively claim all the inventions disclosed in this specification. In this regard, it should not be understood or construed that the applicant of the present application has waived, prior to filing of the present application, his right to the grant of patents for inventions which are not claimed at the time of filing the present application. As long as the laws or treaties of countries or districts which have accepted the filing of the present application permit, the applicant of the present application reserves a right to the grant of patents for inventions which are not claimed in the present application, a right to file divisional applications for the inventions, and a right to claim the inventions by amendments, and all other rights. This shall not apply if the applicant of the present application has clearly and definitively expressed an opposing intention.

An example of a summary of the present disclosure based on another aspect is as follows.

A first invention relates to a method for quantum-mechanically collimating an atomic beam, the method comprising:

irradiating the atomic beam with a pumping laser beam having a wavelength corresponding to a transition between a ground state and an excited state of atoms in the atomic beam, thereby causing the atoms to make transition from the ground state to the excited state and further relax from the excited state to a metastable state of the atoms; and
irradiating, after the irradiating of the atomic beam with the pumping laser beam, the atomic beam with a filtering laser beam having a wavelength corresponding to a transition between the ground state and the metastable state, whereby the atoms in the metastable state having velocity components equal to or smaller than a predetermined velocity component $\Delta v$ in a traveling direction of the filtering laser beam are caused to make transition to the ground state.

A second invention relates to a collimator for quantum-mechanically collimating an atomic beam, the collimator comprising an irradiation device configured to irradiate the atomic beam with a pumping laser beam and a filtering laser beam in this order, wherein

the pumping laser beam is a laser beam having a wavelength corresponding to a transition between a ground state and an excited state of atoms in the atomic beam, and

the filtering laser beam is a laser beam having a wavelength corresponding to a transition between the ground state and a metastable state to which atoms in the excited state make transition in a relaxation process.

According to a third invention, in the collimator of the second invention,
the filtering laser beam is a Gaussian beam, and $\Delta v = \alpha \times \Delta v/k$ is satisfied, where $\Delta v$ represents a predetermined maximum value of velocity components, in a traveling direction of the filtering laser beam, of the atoms that make transition from the metastable state to the ground state due to passage of the atomic beam through the filtering laser beam, $\Delta v$ represents transit-time broadening of atoms that cross the filtering laser beam and have no velocity component in the traveling direction of the filtering laser beam, $\alpha$ represents a correction coefficient smaller than 1 indicating that a linewidth of a spectral line of atoms that cross the filtering laser beam and have velocity components in the traveling direction of the filtering laser beam is reduced to be narrower than $\Delta v$, and k represents a wave number of the filtering laser beam.

According to a fourth invention, in the collimator of the third invention, $\alpha \cong 0.95$ is satisfied.

According to a fifth invention, in the collimator according to any one of the second invention to the fourth invention, a power density of the pumping laser beam is greater than a saturation intensity of the transition between the ground state and the excited state, and $W > v \times E \times N$ is satisfied, where W represents a width of the pumping laser beam through which the atomic beam passes, v represents velocity components of the atoms in a traveling direction of the atomic beam, N represents the number of times of excitation and relaxation cycles required for each of the atoms to relax to the metastable state with a predetermined probability in the relaxation process, and E represents an expected value of a time required for each atom in the excited state to relax only once.

According to a sixth invention, in the collimator according to any one of the second invention to the fifth invention, a traveling direction of the pumping laser beam is unparallel to the traveling direction of the filtering laser beam.

A seventh invention relates to an atomic interferometer, the atomic interferometer comprising:

an atomic beam generation device for continuously generating an atomic beam;
a moving standing light wave generation device for generating three or more moving standing light waves; and
an interference device for obtaining an atomic beam resulting from an interaction between the atomic beam and the three or more moving standing light waves, wherein
the atomic beam generation device comprises an atomic beam source, and a collimator,
the collimator comprises an irradiation device configured to irradiate the atomic beam with a pumping laser beam and a filtering laser beam in this order,
the pumping laser beam is a laser beam having a wavelength corresponding to a transition between a ground state and an excited state of atoms in the atomic beam, and
the filtering laser beam is a laser beam having a wavelength corresponding to a transition between the ground state and a metastable state to which atoms in the excited state make transition in a relaxation process.

An eighth invention relates to an atomic gyroscope, the atomic gyroscope comprising:

an atomic beam generation device for continuously generating an atomic beam;
a moving standing light wave generation device for generating three or more moving standing light waves;
an interference device for obtaining an atomic beam resulting from an interaction between the atomic beam and the three or more moving standing light waves; and
an observation device for detecting an angular velocity or acceleration by observing the atomic beam from the interference device, wherein
the atomic beam generation device comprises an atomic beam source, and a collimator,
the collimator comprises an irradiation device configured to irradiate the atomic beam with a pumping laser beam and a filtering laser beam in this order,
the pumping laser beam is a laser beam having a wavelength corresponding to a transition between a ground state and an excited state of atoms in the atomic beam, and
the filtering laser beam is a laser beam having a wavelength corresponding to a transition between the ground state and a metastable state to which atoms in the excited state make transition in a relaxation process.

<Supplement 2>

Although the present invention has been described with reference to illustrative embodiments, those skilled in the art will appreciate that various changes can be made and components thereof can be replaced by equivalents without departing from the scope of the invention. Further, many modifications may be made to adapt a particular system, device, or components thereof to the teachings of the present invention without departing from the essential scope thereof. Therefore, the present invention is not limited to the particular embodiments disclosed to implement the present invention, but is intended to include all embodiments falling within the scope of the appended claims.

Further, the use of terms such as "first" and "second" does not imply any order or importance, but the terms such as "first" and "second" are used to distinguish elements from one another. The terminology used in the present specification is for the purpose of describing the embodiments, and is not intended to limit the present invention in any way. The term of "comprising" and conjugations thereof, when used in the present specification and/or in the appended claims, clarify the presence of the mentioned features, steps, operations, elements and/or components, but does not exclude the presence or addition of one or more other features, steps, operations, elements, components and/or groups thereof. The term of "and/or" includes any and all combinations of one or more of the associated listed elements, if any. In the claims and the specification, unless stated otherwise, words such as "connect", "couple", "join", "link" or synonyms thereof, and all word forms thereof do not necessarily deny the existence of one or more intermediate elements between two elements that are "connected" or "coupled" to each other or "linked" to each other, for example. In the claims and the specification, the term of "any", if any, is to be understood as having the same meaning as the generic symbol $\forall$ unless stated otherwise. For example, an expression of "for any X" has the same meaning as "for all Xs" or "for each X". Expressions such as "at least one of A, B, and C" (e.g. "at least one of A, B and C", "at least one of A, B or C", and "at least one of A, B and/or C"), if any, means that one element is arbitrarily selected from a set P obtained by excluding an empty set $\phi$ from a power set $2^S$ of a set S containing all listed elements unless otherwise specified. In this example, S={A, B, C}, $2^S$={$\phi$, {A}, {B}, {C}, {A, B}, {A, C}, {B, C}, {A, B, C}}, P={{A}, {B}, {C}, {A, B}, {A, C}, {B, C}, {A, B, C}}, and this example means that one element (for example, {A, C}) is arbitrarily selected from the set P.

Unless defined otherwise, all terms (including technical and scientific terms) used in the present specification have the same meaning as generally understood by those skilled in the art to which the present invention belongs. Further, terms such as those defined in generally used dictionaries should be construed to have meanings consistent with their meanings in the related art and the context of the present disclosure, and they should not be construed ideally or overly formally unless explicitly defined.

It will be appreciated that a number of techniques and steps are disclosed in the description of the present invention. Each of these has individual advantages, and each can also be used in combination with one or more, or even all, of the other disclosed techniques. Therefore, in order to avoid complication, the present specification refrains from describing every possible combinations of individual techniques or steps. Nevertheless, the present specification and claims should be read with the understanding that such combinations are fully within the scope of the present invention and claims.

Corresponding structures, materials, acts and equivalents of all functional elements coupled with means or steps in the claims recited below, if any, are intended to include structures, materials, or acts for implementing functions in combination with other elements.

Although the embodiments of the present invention have been described above, the present invention is not limited to these embodiments. Various changes and modifications may be made without departing from the gist of the present invention. The embodiments selected and described are for the purpose of illustrating the principles of the present invention and its practical application. The present invention may be used as various embodiments with various changes or modifications, and the various changes or modifications are determined according to the expected use. All such changes and modifications are intended to be included within the scope of the present invention defined by the appended claims, and it is intended that when they are construed in accordance with the breadth to which they are impartially, lawfully and justly given, the same protection is given to them.

**Claims**

**1.** A method for quantum-mechanically collimating an atomic beam comprising:

irradiating the atomic beam with a pumping laser beam having a wavelength corresponding to a transition between a ground state and an excited state of atoms in the atomic beam, thereby causing the atoms to make transition from the ground state to the excited state and further relax from the excited state to a metastable state of the atoms; and

irradiating, after the irradiating of the atomic beam with the pumping laser beam, the atomic beam with a filtering laser beam having a wavelength corresponding to a transition between the ground state and the metastable state, whereby the atoms in the metastable state having velocity components equal to or smaller than a predetermined velocity component $\Delta v$ in a traveling direction of the filtering laser beam are caused to make transition to the ground state.

2. A collimator for quantum-mechanically collimating an atomic beam comprising an irradiation means for irradiating the atomic beam with a pumping laser beam and a filtering laser beam in this order, wherein

the pumping laser beam is a laser beam having a wavelength corresponding to a transition between a ground state and an excited state of atoms in the atomic beam, and

the filtering laser beam is a laser beam having a wavelength corresponding to a transition between the ground state and a metastable state to which atoms in the excited state make transition in a relaxation process.

3. The collimator according to claim 2, wherein

the filtering laser beam is a Gaussian beam, and

$\Delta v = \alpha \times \Delta v/k$ is satisfied, where $\Delta v$ represents a predetermined maximum value of velocity components, in a traveling direction of the filtering laser beam, of the atoms that make transition from the metastable state to the ground state due to passage of the atomic beam through the filtering laser beam, $\Delta v$ represents transit-time broadening of atoms that cross the filtering laser beam and have no velocity component in the traveling direction of the filtering laser beam, $\alpha$ represents a correction coefficient smaller than 1 indicating that a linewidth of a spectral line of atoms that cross the filtering laser beam and have velocity components in the traveling direction of the filtering laser beam is reduced to be narrower than $\Delta v$, and k represents a wave number of the filtering laser beam.

4. The collimator according to claim 3, wherein $\alpha \cong 0.95$ is satisfied.

5. The collimator according to claim 2, wherein a power density of the pumping laser beam is greater than a saturation intensity of the transition between the ground state and the excited state, and $W > v \times E \times N$ is satisfied, where W represents a width of the pumping laser beam through which the atomic beam passes, v represents velocity components of the atoms in a traveling direction of the atomic beam, N represents a number of times of excitation and relaxation cycles required for each of the atoms to relax to the metastable state with a predetermined probability in the relaxation process, and E represents an expected value of a time required for each of the atoms in the excited state to relax only once.

6. The collimator according to claim 2, wherein a traveling direction of the pumping laser beam is unparallel to the traveling direction of the filtering laser beam.

7. An atomic interferometer comprising:

an atomic beam generation means for continuously generating an atomic beam;

a moving standing light wave generation means for generating three or more moving standing light waves; and

an interference means for obtaining an atomic beam resulting from an interaction between the atomic beam and the three or more moving standing light waves, wherein

the atomic beam generation means comprises an atomic beam source, and a collimator,

the collimator comprises an irradiation means for irradiating the atomic beam with a pumping laser beam and a filtering laser beam in this order,

the pumping laser beam is a laser beam having a wavelength corresponding to a transition between a ground state and an excited state of atoms in the atomic beam, and

the filtering laser beam is a laser beam having a wavelength corresponding to a transition between the ground state and a metastable state to which atoms in the excited state make transition in a relaxation process.

8. An atomic gyroscope comprising:

an atomic beam generation means for continuously generating an atomic beam;

a moving standing light wave generation means for generating three or more moving standing light waves;

an interference means for obtaining an atomic beam resulting from an interaction between the atomic beam and the three or more moving standing light waves; and

an observation means for detecting an angular velocity or acceleration by observing the atomic beam from the interference device, wherein

the atomic beam generation means comprises an atomic beam source, and a collimator,

the collimator comprises an irradiation means for irradiating the atomic beam with a pumping laser beam and a filtering laser beam in this order,

the pumping laser beam is a laser beam having a wavelength corresponding to a transition between a ground state and an excited state of atoms in the atomic beam, and

the filtering laser beam is a laser beam having a wavelength corresponding to a transition between the ground state and a metastable state to which atoms in the excited state make transition in a relaxation process.

FIG. 1

FIG. 2

## FIG. 3

$\tau_1 = 460$ ns $\quad ^3D_2$ ————————

$R = 0.12$

$^3P_2 \quad \tau_2 = {\sim}10$ s

$\lambda_1 = 404$ nm

$\lambda_2 = 507$ nm

$\Gamma = {\sim}2\pi{\times}10$ mHz

$^1S_0$ ————————

## FIG. 4

FIG. 5

FIG. 6

EP 4 495 952 A1

Europäisches
Patentamt
European
Patent Office
Office européen
des brevets

# EUROPEAN SEARCH REPORT

**Application Number**

EP 24 18 2131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2020/116019 A1 (JAPAN AVIATION ELECTRONICS IND LTD [JP] TOKYO INST TECH [JP]) 11 June 2020 (2020-06-11) ----- | 1-8 | INV. G21K1/00 G21K1/02 ADD. H05H3/00 |

**TECHNICAL FIELDS SEARCHED (IPC)**

G21K
H05H

The present search report has been drawn up for all claims

| Place of search | Date of completion of the search | Examiner |
|---|---|---|
| Munich | 15 November 2024 | Oestreich, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 24 18 2131

This annex lists the patent family members relating to the patent documents cited in  the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | | Publication date |
|---|---|---|---|---|
| WO 2020116019 A1 | 11-06-2020 | AU | 2019391480 A1 | 20-05-2021 |
| | | CN | 112955978 A | 11-06-2021 |
| | | EP | 3855455 A1 | 28-07-2021 |
| | | JP | 6713643 B2 | 24-06-2020 |
| | | JP | 2020091239 A | 11-06-2020 |
| | | US | 2021389114 A1 | 16-12-2021 |
| | | US | 2023160683 A1 | 25-05-2023 |
| | | WO | 2020116019 A1 | 11-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6713643 B
- JP 6650647 B
- JP 6948655 B
- JP 6948656 B

**Non-patent literature cited in the description**

- **ST. BERNET** ; **R. ABFALTERER** ; **C. KELLER** ; **M. OBERTHALER** ; **J. SCHMIEDMAYER** ; **A. ZEILINGER**. Matter waves in time-modulated complex light potentials. *Phys. Rev. A*, 2000, vol. 62, 023606

- **J. SCHOSER** ; **A. BATAR** ; **R. LOW** ; **V. SCHWEIKHARD** ; **A. GRABOWSKI** ; **YU. B. OVCHINNIKOV** ; **T. PFAU**. Intense source of cold Rb atoms from a pure two-dimensional magneto-optical trap. *PHYSICAL REVIEW A*, 2002, vol. 66, 023410